# EUROPEAN PATENT SPECIFICATION

(11) **EP 3 739 810 B1**
(45) Date of publication and mention of the grant of the patent: **07.10.2026**
(21) Application number: 18905609.6
(22) Date of filing: 29.12.2018
(51) Int. Cl.: H04L 41/12, G06Q 50/06, G09B 29/10, G06F 16/29, H04L 51/222, H04L 51/234, H04L 41/14, H04L 41/22, H04L 51/04

(54) **MODELING ANALYSIS METHOD BASED ON GEOGRAPHIC TARGETS**
MODELLIERUNGSANALYSEVERFAHREN BASIEREND AUF GEOGRAPHISCHEN ZIELEN
PROCÉDÉ D'ANALYSE DE MODÉLISATION BASÉ SUR DES CIBLES GÉOGRAPHIQUES

(30) Priority: 09.02.2018 CN 201810131136
(43) Date of publication of application: 18.11.2020
(73) Proprietor: Chen, Longyu, Xi'an Shaanxi 710000 (CN)
(72) Inventor: Chen, Longyu, Xi'an Shaanxi 710000 (CN)
(74) Representative: Gulde & Partner
(86) International application number: PCT/CN2018/125393
(87) International publication number: WO 2019/153962

(56) References cited:
- EP-A2- 3 190 528
- CN-A- 101 944 204
- CN-A- 103 617 295
- CN-A- 104 361 586
- CN-A- 108 199 907
- US-B1- 8 847 949
- US-B2- 9 841 456

## Description

### CROSS REFERENCE TO RELATED APPLICATIONS

This application is based on Chinese Patent Application No. 201810131136.4 filed on February 09, 2018 and claims its priority.

### TECHNICAL FIELD

This application relates to information technology and is a modeling and analysis method based on electronic map application. It can be used for the development of big data modeling and analysis tools.

### BACKGROUND

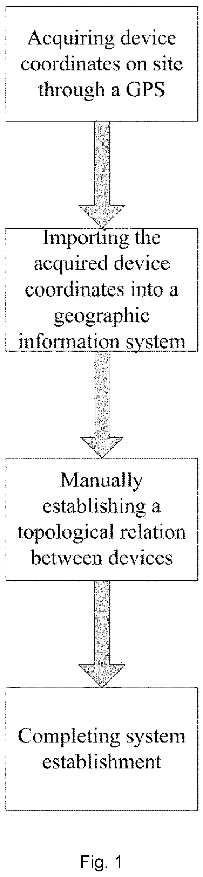

It has become a trend to use big data analysis tools to manage daily social affairs with the development of society. With the establishment of the management network, a large amount of field data entry and maintenance work has arisen. Currently, the acquisition of geographic-position-related data mostly relies on onsite positioning by staff using handheld GPS, and then the acquired data is manually imported into a geographic information system. For the geographic information system, the imported data represents only the acquired coordinates, not the type of the target. When the data is entered into the system for application, data reprocessing is required, which not only classifies the data, but also connects the topological relation between the data. This not only results in low efficiency and is more prone to errors in data classification and connection relationships, but also is unable to respond to the changing requirements of the network operating state in time, causing great difficulties to the application of the target management system. This traditional management method is no longer suitable for the future development needs of big data analysis and management. How to quickly and efficiently complete the processing of massive data sources has become a major problem in current big data management network systems (Fig. 1: modeling method of the prior art).

In order to improve the accuracy of data modeling, Intergraph Corporation in the United States of America has proposed a rule-driven device management solution years ago. ESRI also developed application modules for related products. However, they did not demonstrate an in-depth combination with the data collection via mobile clients based on current Internet applications.

Nowadays, based on the emergence of various types of Internet applications, domestic scholars have proposed some new methods for the modeling and analysis of various types of data, mainly including: a user can bind his/her meter number in the WeChat and then send the geographic position to obtain a text content about the information of power outage in the surrounding area. Nonetheless, this method cannot dynamically respond to changes in the operating state of the power grid. The source of the outage data has to depend on the power grid company, which makes the rapid response of information difficult. The acquired pictures are bound with information, achieving an intuitive display of object information. However, it greatly differs from the present application of analyzing the acquired targets as a network node in that the former does not involve dynamic operation analysis of the network. The automatic guided vehicle matches the local environment information currently observed with the global map established in advance by means of its built-in positioning module, and plans a feasible optimal path in the global map using a path planning module. It focuses on the related application of geographic information in the map, and it is different from the method of considering the target as a component of the network and focusing on network analysis in the present application. The commonality of the above-mentioned methods is that they all focus on the use of geographic position information, and they rely more on electronic maps. This application uses the electronic map only as a background reference. With the formation of the network, the geographic target is considered as a component of the network, and more attention is paid to the impact of the operation analysis of the network dynamic change on the related geographic target nodes. So far, no report has been found on the direct application of this technology to network modeling and analysis. EP 3 190 528 A2 discloses a method for creating and managing a geospatial network model for a distribution network in a client environment using GIS data.

### SUMMARY

The invention is defined by the claims. An objective of the present application is to provide a modeling analysis method based on geographic targets, in which data acquisition is carried out on the basis of a mobile client, and rapid analysis is carried out on the basis of a predetermined rule, so that the workload of maintenance and analysis of data in an existing network management system is reduced. This facilitates the management and analysis of geographic data by means of big data.

To achieve the above objective, a technical proposal of the present application is that, a modeling analysis method based on geographic targets. The object is achieved by the features of the respective independent claims. Further embodiments are defined in the respective dependent claims.

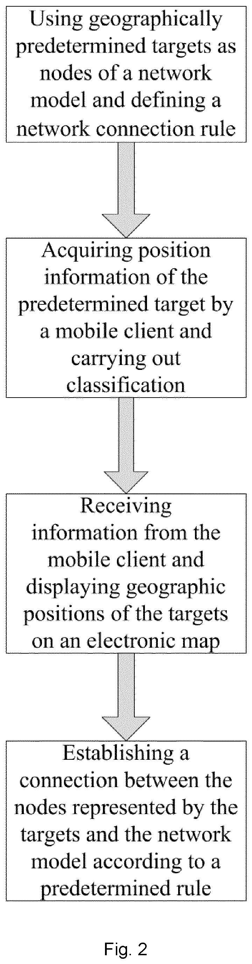

Compared with the prior art, the present application has the following advantages and effects:
1. According to distribution characteristics of the map targets relying on the geographical environment, the present application combines the network model based on the connection rule, the electronic map application based on space management, and the data positioning and acquiring technology based on mobile clients. Geographically predetermined targets are used as nodes of a network model, and the position information of the nodes is acquired by means of the mobile client, so that a connection is established between the nodes representing the geographic positions and the network model according to a predetermined rule, thereby completing the network establishment efficiently (Fig. 2: a schematic diagram of a modeling method of the present application).
2. Compared with the existing methods, by applying the method of the present application, the data acquisition of predetermined targets around a road may be completed through the mobile terminal when moving along the road, and the establishment and analysis of the network model of the target management system based on the electronic map may be completed rapidly. This method greatly improves the efficiency of data entry, which promotes the maintenance and analysis efficiency of massive data based on geographic information.
3. Since the electronic map is mainly used as the display background of the target management network, it does not affect the topology of the network. Therefore, it is not necessary to use a special measuring tool for high-precision onsite positioning. The position information obtained through the positioning technology of the mobile terminal can fully meet the requirements of management and display, reducing the investment of special measuring tools and training time, thereby saving significant human and financial resources.
4. For the target management network, virtually displaying the geographic position of the targets on the electronic map according to the geographical distribution of the targets is beneficial to the macro management of the targets. According to the change of the state of the targets, the topological connection between targets is directly affected and the efficiency of network operation and analysis is improved. The combination of the two will help enhance the management of the target network based on geographic information.
5. The construction of the urban pipeline network requires the approval of the planning department. The government has first-hand detailed information, so it can entrust a third party to set up a device management network in a monopoly industry. At the same time, acquisition of information of a user's device which newly joins the network can be carried out simultaneously with the construction of the network. With the improvement of the network, the analysis results of the network operating state may come from the feedback of users, and it may not necessarily rely on the information provided by the monopoly industries such as electricity and water supply. This is helpful for the government to obtain the operating state of the municipal network as soon as possible, and improve the quality of public services and emergency response efficiency.

Therefore, in the target management network based on geographic information, the predetermined targets are used as nodes in the network, and the classification of different targets is achieved by means of the positioning of the mobile client. On the electronic map, the connections between the targets and the network are automatically completed according to the predetermined connection rule. Accordingly, the establishment of the network may be quickly completed and efficient management of the targets may be achieved.

### BRIEF DESCRIPTION OF THE DRAWINGS

Fig. 1 is a schematic diagram of an existing modeling method;
Fig. 2 is a schematic diagram of a modeling method of the present application;
Fig. 3 is a schematic diagram of implementation steps of an example of network modeling;
Fig. 4 is a schematic diagram of network modeling of a power grid management system;
Fig. 5 is a schematic diagram of connection attributes of a substation;
Fig. 6 is a schematic diagram of connection attributes of a ring main unit;
Fig. 7 is a schematic diagram of connection attributes of a public transformer;
Fig. 8 is a schematic diagram of connection attributes of a switch;
Fig. 9 is a schematic diagram of connection attributes of users;
Fig. 10 is a schematic diagram of acquisition of device data based on WeChat application on a mobile phone;
Fig. 11 is a schematic diagram of devices positions based on an electronic map;
Fig. 12 is a schematic diagram of connection of devices based on rule networking;
Fig. 13 is a schematic diagram of a topological connection of a network in a normal operation mode;
Fig. 14 is a schematic diagram of a topological connection of the network after a change in the operation mode;
Fig. 15 is a schematic diagram of a user inquiry during a power outage;
Fig. 16 is a schematic diagram of a power outage handling system for users.

### DESCRIPTION OF THE EMBODIMENTS

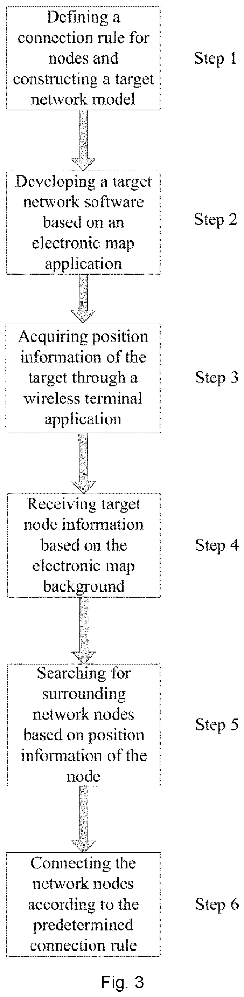

Referring to Fig. 3, Fig. 3 is a schematic diagram of implementation steps of an example of network modeling.

Step 1: defining a connection rule for nodes and constructing a target network model.
1) Content: using geographically predetermined targets as the nodes of the network model, defining a connection rule, and constructing network model.
2) Specific approach: a rule-driven device management modeling method similar to that of Intergraph Corporation is adopted. For the target management network to be established, first listing the types of targets involved in the network, and then defining the targets as nodes of the network, and defining a connection rule of the various types of nodes in the network, finally connecting the nodes with lines according to the rule to complete the construction of the target management network model.

Step 2: developing a target network software based on an electronic map application.
1) Content: developing a network target management system based on an electronic map and rule connections.
2) Specific approach: based on a rule-driven device management modeling method similar to that of Intergraph Corporation, developing a network software which uses an electronic map as the background and is based on cloud storage and cloud computing to prepare for the application of the network management model.

Step 3: acquiring position information of the targets through a wireless terminal application.
1) Content: developing data acquisition client based on position acquisition technology of a wireless terminal.
2) Specific approach: developing mobile client application based on wireless positioning acquisition technology to acquire geographic position information of target nodes.

Step 4: receiving target node information based on the electronic map background.
1) Content: receiving client information and displaying the position of the target node on the electronic map.
2) Specific approach: receiving target node information (including node position coordinates, node types, etc.) sent by the client in the cloud, and using the electronic map as the background to display the node information on the cloud electronic map.

Step 5: searching for surrounding network nodes based on the position information of the node.
1) Content: searching for information of other network nodes around the present node on the electronic map.
2) Specific approach: on the electronic map, taking the geographic position of the present node as a center and searching for nodes information of the adjacent network around the target according to the predetermined connection rule.

Step 6: connecting the network nodes according to the predetermined connection rule.
1) Content: connecting the present node to the searched network nodes according to the predetermined connection rule.
2) Specific approach: based on the position of the node and the type of the node displayed on the electronic map, connecting the present node and the adjacent nodes in the network according to the predetermined rule, so that the node joins the network to be a part of the network model.

### Embodiments:

### ( I ) Application for network modeling of a power grid management system

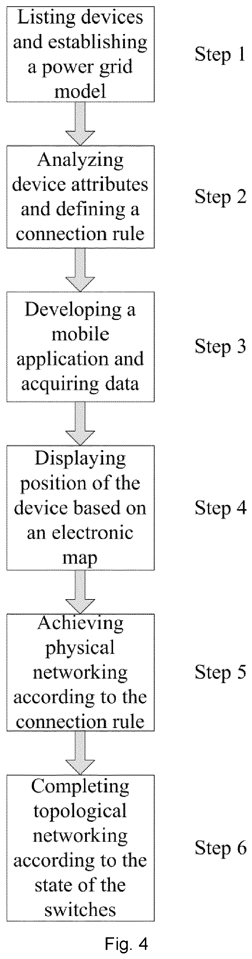

As an essential part of urban management, a good power grid management system is an important guarantee of the power supply. A power grid is an important medium for power companies to supply power to users. Through an efficient power grid management system, the power companies can provide users with high-quality and reliable power services. A complete power grid management system not only includes various types of power grid device, but also contains user information that changes constantly. How to rapidly complete the establishment of a power grid management system is an important embodiment of the present application. (Fig. 4: a schematic diagram of network modeling of a power grid management system)

### Step 1:

1. Content: making a list of devices and establishing a power grid model.
2. Specific approach:
   1) Making a list of devices involved in the power grid system, such as targets like substations, ring main units, public transformers, switches etc., and large, medium and small users and the like;
   2) Developing rule-driven device management application similar to that of Intergraph Corporation. This software is big data cloud application using electronic maps as background. In the software, various types of devices and users are defined as network nodes, and the nodes are connected by lines to form a management network for power grid targets.

### Step 2:

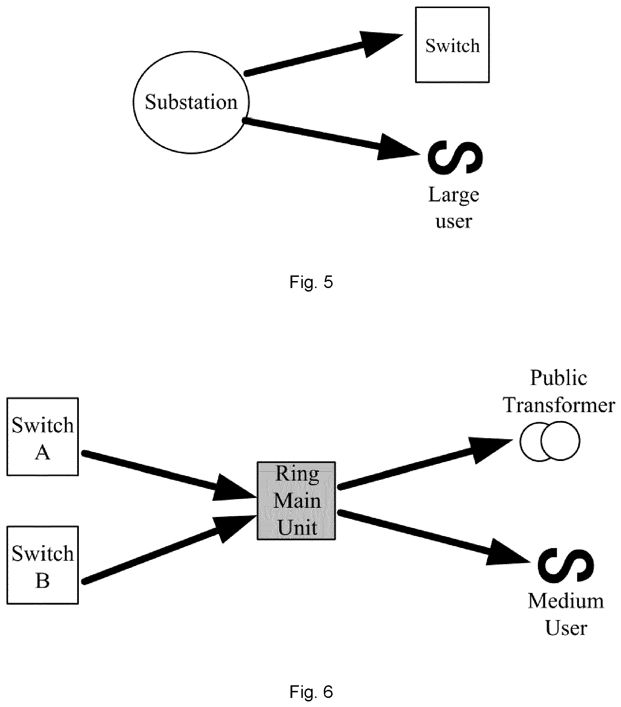

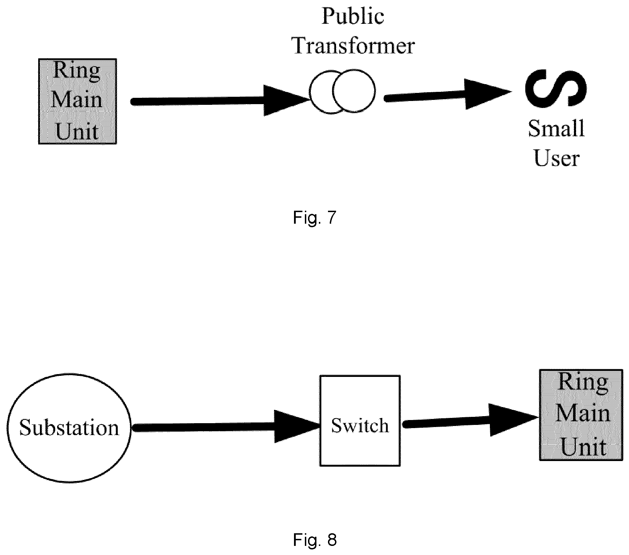

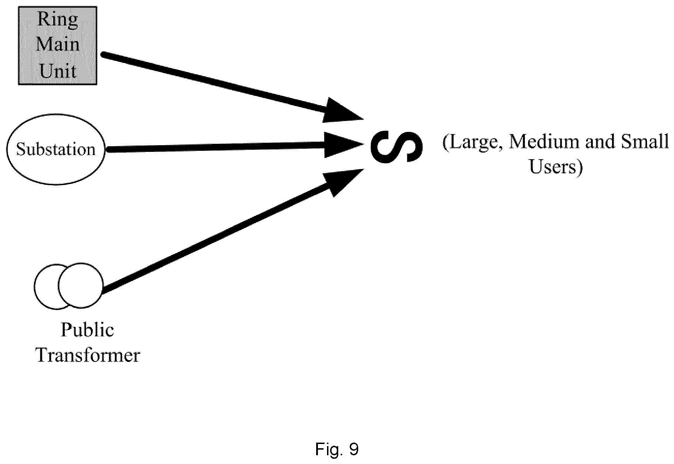

1. Content: analyzing device attributes and defining a connection rule.
2. Specific approach: during the development of the cloud software, the topological connection rule of different types of nodes in the network is defined in advance according to different states of the various devices when the power grid is in operation in the reality. A substation as a power supply point supplies power to switches and large users (Fig. 5: a schematic diagram of the connection attributes of a substation); a ring main unit as a device in the line supplies power to medium users and public transformers, and its power is supplied from different switches (Fig. 6: a schematic diagram of the connection attributes of the ring main unit); a public transformer as a device at the terminal of the line supplies power to small users such as residents, and its upper-level power supply is from the ring main unit (Fig. 7: a schematic diagram of connection attributes of a public transformer); a switch as a device in the line can be connected to the substation and the ring main unit. Whether the switch is open or closed directly affects the power supply area of the power supply in the line and plays a decisive role in the change of the topological connection relationship of the devices in the network (Fig. 8: a schematic diagram of switch connection attributes); similarly, according to the amount of electricity consumed by the electrical devices of the users, their power is supplied from the substation, the ring main unit and the public transformer respectively (Fig. 9: a schematic diagram of user connection attributes).

### Step 3:

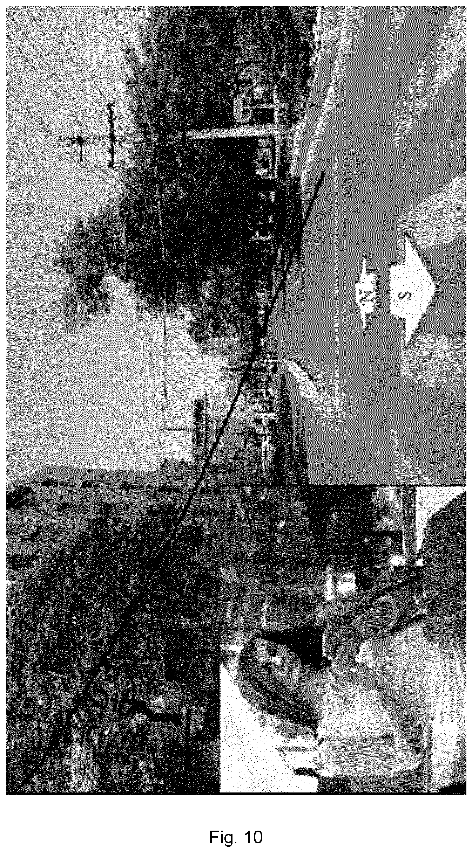

1. Content: developing a mobile application and acquiring data.
2. Specific approach:
   1) Developing a mobile client application based on data acquisition in order to facilitate the classification of the position information of the acquired devices;
   2) Starting from the substation, acquiring the geographic position information of the substation, the ring main unit, the public transformer, the switch and various users along the path of the line, and sending the information through the clients (Fig. 10: a schematic diagram of acquisition of device data based on a mobile client application).

### Step 4:

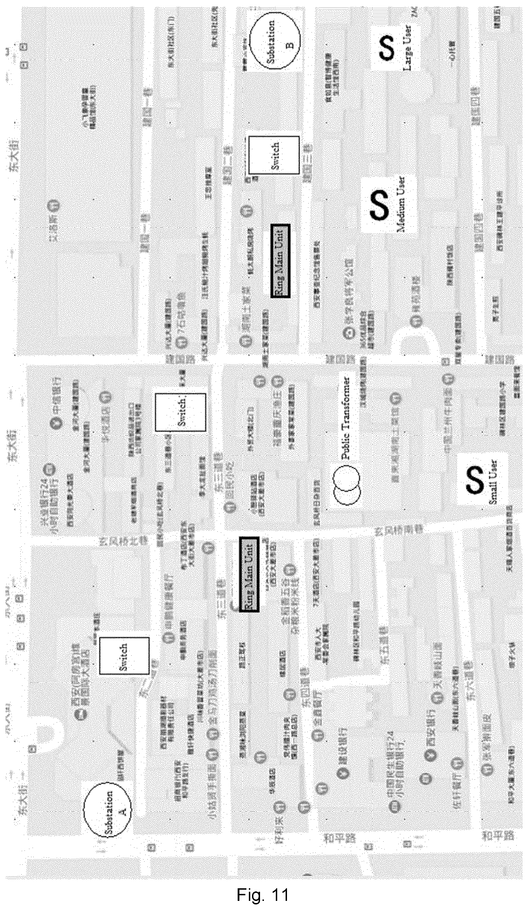

1. Content: displaying position of the device based on an electronic map.
2. Specific approach: receiving data sent by mobile clients in the cloud, according to the distribution of the power grid on the streets, considering users as devices in the power grid and displaying the position of different devices and various users in the power grid model on the electronic map, so that the information of devices in the grid and users can be displayed intuitively on the map (Fig. 11: a schematic diagram of device position based on an electronic map).

### Step 5:

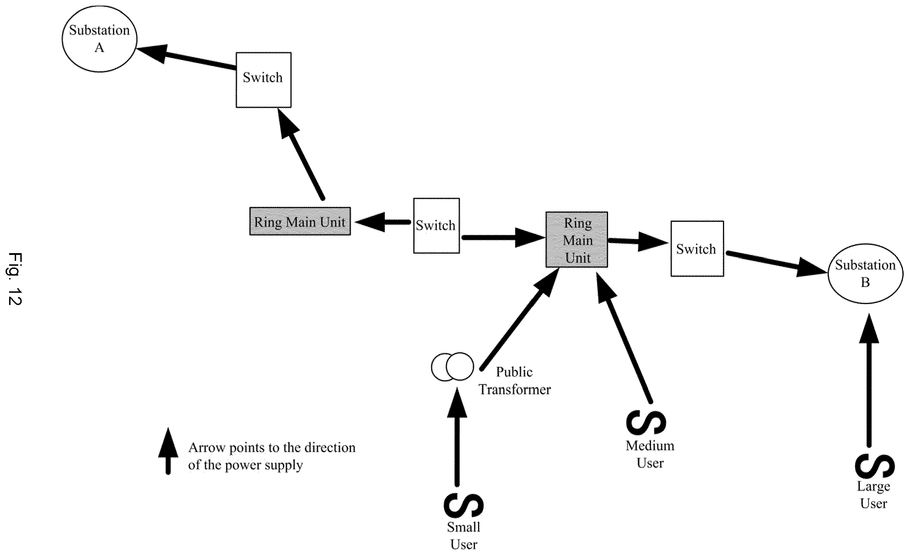

1. Content: achieving physical networking according to the connection rule.
2. Specific approach:
   1) In the cloud software, searching information of surrounding devices according to the positions of different devices and various users displayed on the electronic map;
   2) According to the different types of devices and the established connection rule, a physical connection between the geographic position of the device and the upper-level power supply point is made. That is: switches and large users can be connected to substations; public transformers and medium users can be connected to ring main units; small users such as residents can be connected to public transformers. The automatic connection of the devices mainly depends on the topological relation set by the rule, and is not related to the line connecting the devices (Fig. 12: a schematic diagram of connection of devices based on rule networking).

### Step 6:

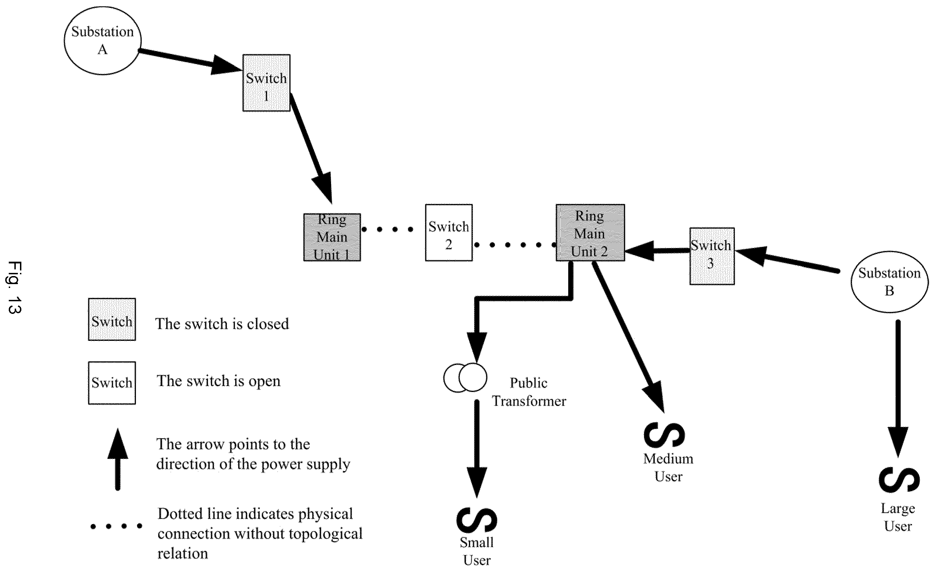

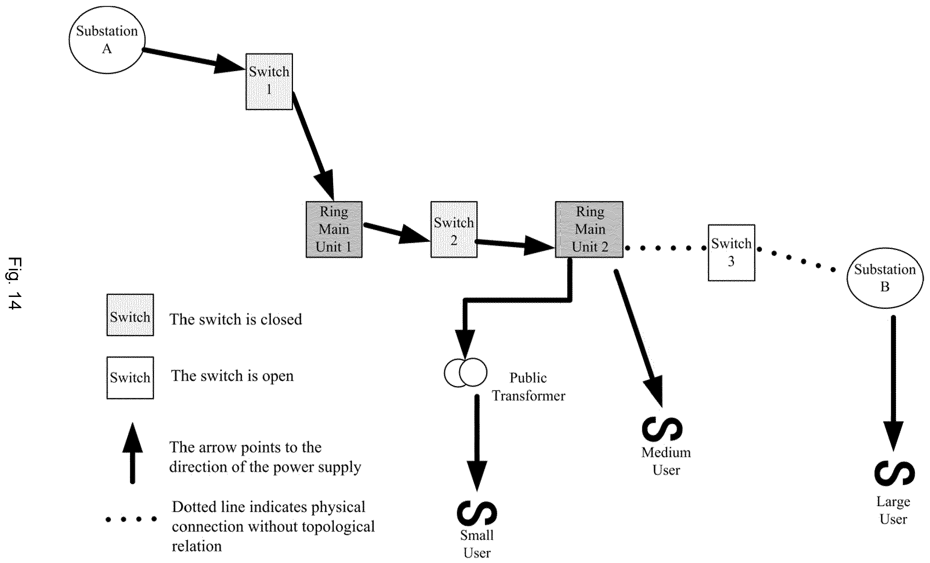

1. Content: completing topological networking according to the state of the switches.
2. Specific approach:
   1) In the cloud software based on the electronic map, determining the topological relation between adjacent devices in the network according to the different operating states of on and off of the switches;
   2) According to the types of different nodes such as substations, ring main units, public transformers, switches and large, medium and small users and the current direction of their power supply device, checking the network connection with the lower-level power supply device to ensure the correct topological relation so as to complete the establishment of the entire network system.
   3) The spatial positions of lines, devices and users in the power grid are closely related to the electronic map; the physical connection between network nodes is closely related to the established connection rule; the topological connection relationship between network nodes is closely related to the connecting state of the switches; the line connection between the nodes is only used for spatial connection, and has no direct impact on the topological relation between the nodes (Fig. 13: a schematic diagram of a topological connection of a network in a normal operation mode). In Fig. 13, in the normal operation mode of the power grid, switches 1 and 3 are closed, and switch 2 is open. The dotted lines on both sides of switch 2 only indicate that switch 2 and ring main units 1 and 2 are only physically connected without topological relation, and the lines represented by the dotted lines have no electricity. The upper-level nodes of ring main units 1 and 2 come from switches 1 and 3, respectively, and their power supplies come from substation A and substation B, respectively.
   4) The change of the connecting state of the switches in the network will determine the operating state of the entire network and directly affect the topological connection relationship between each node in the network. That is, the change of the connecting state of the switches will affect the power supply range of the substation on the power supply side, and directly affect the direction of power supply of related targets, resulting in a change in the topological relation of the upper and lower target nodes (Fig. 14: a schematic diagram of a topological connection of the network after a change in operation mode). In Fig. 14, the operation mode of the power grid is changed. Switches 1 and 2 are closed, and switch 3 is open, and the power supply ranges of substations A and B are changed. The upper-level node of the ring main unit 2 is changed from switch 3 to switch 2, and its power supply is changed from substation B to substation A. Changes occurred in the operating state of the entire network as well as in the topological relation between ring main unit 2 and its upper-level node.

### (II) Application for a power outage management system for users

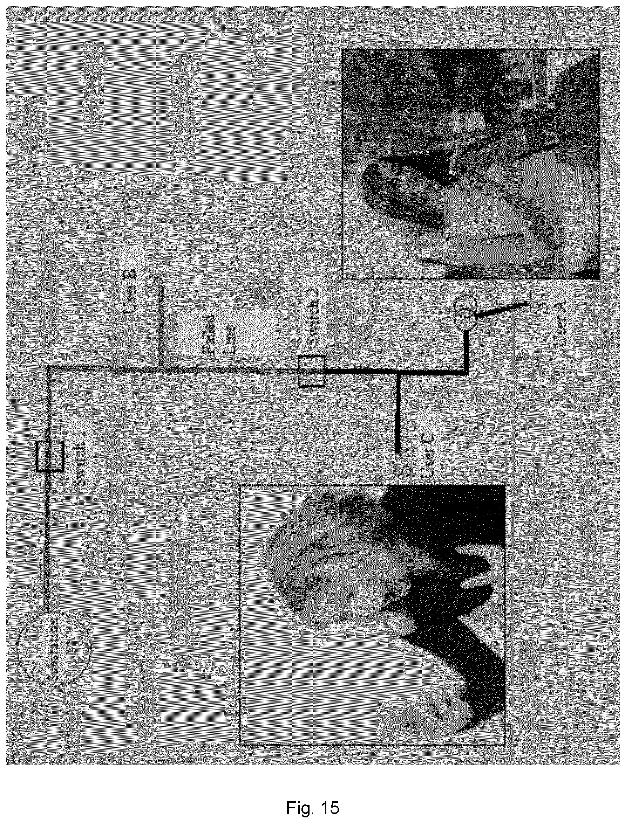

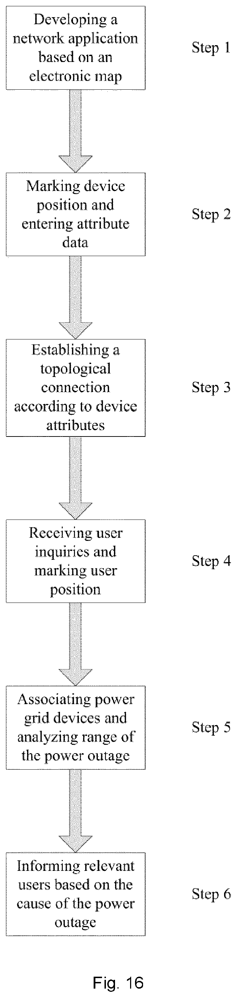

Demand on the power supply has been raised with the improvement in people's living standards. Finding out the outage range and informing relevant users in time by quickly positioning may undoubtedly show high-quality services (Fig. 15: a schematic diagram of outage inquiries from users). The application in the present disclosure may greatly improve the efficiency of information determination and notification of a power outage, which is advantageous to the improvement of service. The relevant steps are as follows (Fig. 16: a schematic diagram of a power outage handling system for users).

### Step 1:

1. Content: developing a network application based on an electronic map.
2. Specific approach: developing power grid management software based on an application of geographic information system similar to that of Intergraph and ESRI Corporation. The software uses a device as a network node in the power grid management system and is a network management application based on an electronic map.

### Step 2:

1. Content: marking the position of the device and entering attribute data.
2. Specific approach: when the power grid management software is applied, the geographic position of the device in the grid can be marked directly on the electronic map, and relevant information of the device is inputted.

### Step 3:

1. Content: establishing a topological connection according to device attributes.
2. Specific approach: classifying the devices, and connecting the devices on the map with lines according to the attributes and operating states of the devices, and establishing a topological relation.

### Step 4:

1. Content: receiving user inquiries and marking user position.
2. Specific approach: receiving inquiries of power outage information from users by telephone or WeChat, etc., and at the same time, displaying position information of users on the electronic map.

### Step 5:

1. Content: associating power grid devices and analyzing the range of the outage.
2. Specific approach:
   1) Associating the user with the surrounding power grid devices according to the user's position;
   2) Carrying out classification and analysis of power outage for the user according to power supply situation of the power grid devices;
   3) In Fig. 15, power supply of user A is from a public transformer, power supply of user C is from switch 2, and user B has no power outage information;
   4) According to the analysis of the power outage situation of the users, it can be determined that the failed power supply is all the lines supplied by switch 2. Therefore, all blocks involved in the lines related to switch 2 are within the range of this outage.

### Step 6:

1. Content: combining the causes of the power outage and informing relevant users.
2. Specific approach: according to the analysis results, the range of the power outage can be quickly determined, and related users including A and C can be informed immediately in accordance with the maintenance plan or fault repairing situation, so that a quickly response to the power outage area may be achieved.

## Claims

1. A method for network modeling of a power grid management system, comprising:
Step 1: making a list of devices and establishing a power grid model, wherein Step 1 comprises:
1) making a list of devices involved in the power grid management system; and
2) using an electronic map as background by a rule-driven device management application, wherein in the rule-driven device management application, various types of devices and users are defined as network nodes, and the network nodes are connected by lines to form a management network for a power grid; and different types of the network nodes comprise a substation, a ring main unit, a public transformer, a switch, a large user, a medium user, and a small user, wherein the rule-driven device management application is a cloud application software;
Step 2: analyzing attributes of the devices and defining a connection rule, wherein Step 2 comprises:
defining the connection rule for the different types of the network nodes in advance according to different states of the various devices when the power grid is in operation,
the connection rule comprises that the substation as a power supply point supplies power to the switch and the large user, the ring main unit as a device in the line supplies power to the medium user and the public transformer, and power of the ring main unit is supplied from different switches; the public transformer as a device at the terminal of the line supplies power to the small user, and power of the public transformer is from the ring main unit;
Step 3: using a mobile client application to acquire data, wherein Step 3 comprises:
1) acquiring data by the mobile client application; and
2) starting from the substation, acquiring geographic position information of the substation, the ring main unit, the public transformer, the switch, and various users along the path of the line, and sending the information through the mobile client application;
Step 4: displaying geographic position information of the devices based on the electronic map, wherein Step 4 comprises:
displaying the geographic position information of different devices and various users in the power grid model on the electronic map, according to distribution of the power grid on streets, considering the users as devices in the power grid;
Step 5: performing physical networking in accordance with the connection rule, wherein Step 5 comprises:
1) searching information of surrounding devices by the rule-driven device management application, according to the geographic position information of different devices and various users displayed on the electronic map; and
2) making a physical connection between a geographic position of a device and an upper-level power supply device, according to the different types of devices and the established connection rule; and
Step 6: performing topological networking according to states of the switches, wherein Step 6 comprises:
1) determining a topological relation between adjacent devices by the rule-driven device management application, according to different operating states of on and off of the switches; and
2) checking a network connection with a lower-level power supply device, according to the types of different network nodes and a current direction of the corresponding power supply device.

2. The method according to claim 1, wherein the geographic position information of the devices is acquired via a mobile client, the mobile client includes GPS devices, mobile phones, Apple touch, street view shooting vehicles, and mobile devices with wireless positioning and acquisition function, positioning methods include: mobile base station positioning, Wi-Fi positioning and GPS positioning.

3. The method according to claim 1, wherein the geographic position information of the devices is acquired via a mobile client with an instant messaging service.

4. The method according to claim 1, wherein the geographic position information of the devices is acquired via a mobile client with a function such as WeChat, Facebook, and MSN.

## Patentansprüche

1. Verfahren zur Netzwerkmodellierung eines Leistungsnetzverwaltungssystems, umfassend:
Schritt 1: Erstellen einer Liste von Vorrichtungen und Einrichten eines Leistungsnetzmodells, wobei Schritt 1 Folgendes umfasst:
1) Erstellen einer Liste von Vorrichtungen, die an dem Leistungsnetzverwaltungssystem beteiligt sind; und
2) Verwenden einer elektronischen Karte als Hintergrund durch eine regelgetriebene Vorrichtungsverwaltungsanwendung, wobei in der regelgetriebenen Vorrichtungsverwaltungsanwendung verschiedene Arten von Vorrichtungen und Nutzern als Netzwerkknoten definiert sind und die Netzwerkknoten durch Leitungen verbunden sind, um ein Verwaltungsnetzwerk für ein Leistungsnetz zu bilden; und unterschiedliche Arten der Netzwerkknoten eine Umspannstation, eine Ringkabelanlage, einen öffentlichen Transformator, einen Schalter, einen großen Nutzer, einen mittleren Nutzer und einen kleinen Nutzer umfassen, wobei die regelgetriebene Vorrichtungsverwaltungsanwendung eine Cloud-Anwendungssoftware ist;
Schritt 2: Analysieren von Attributen der Vorrichtungen und Definieren einer Verbindungsregel, wobei Schritt 2 Folgendes umfasst:
Definieren der Verbindungsregel für die unterschiedlichen Arten der Netzwerkknoten im Voraus gemäß unterschiedlichen Zuständen der verschiedenen Vorrichtungen, wenn das Leistungsnetz in Betrieb ist,
die Verbindungsregel umfasst, dass die Umspannstation als Leistungszufuhrpunkt dem Schalter und dem großen Nutzer Leistung zuführt, die Ringkabelanlage als Vorrichtung in der Leitung dem mittleren Nutzer und dem öffentlichen Transformator Leistung zuführt und Leistung der Ringkabelanlage von unterschiedlichen Schaltern zugeführt wird; der öffentliche Transformator als Vorrichtung an der Anschlussklemme der Leitung dem kleinen Nutzer Leistung zuführt und Leistung des öffentlichen Transformators von der Ringkabelanlage stammt;
Schritt 3: Verwenden einer mobilen Client-Anwendung zum Erfassen von Daten, wobei Schritt 3 Folgendes umfasst:
1) Erfassen von Daten durch die mobile Client-Anwendung; und
2) ausgehend von der Umspannstation Erfassen von Informationen über die geographische Position der Umspannstation, der Ringkabelanlage, des öffentlichen Transformators, des Schalters und verschiedener Nutzer entlang des Pfads der Leitung und Senden der Informationen anhand der mobilen Client-Anwendung;
Schritt 4: Anzeigen von Informationen über die geographische Position der Vorrichtungen basierend auf der elektronischen Karte, wobei Schritt 4 Folgendes umfasst:
Anzeigen der Informationen über die geographische Position unterschiedlicher Vorrichtungen und verschiedener Nutzer in dem Leistungsnetzmodell auf der elektronischen Karte gemäß einer Verteilung des Leistungsnetzes auf Straßen, wobei die Nutzer als Vorrichtungen in dem Leistungsnetz betrachtet werden;
Schritt 5: Durchführen einer physischen Vernetzung in Übereinstimmung mit der Verbindungsregel, wobei Schritt 5 Folgendes umfasst:
1) Suchen von Informationen von umgebenden Vorrichtungen durch die regelgetriebene Vorrichtungsverwaltungsanwendung gemäß den Informationen über die geographische Position unterschiedlicher Vorrichtungen und verschiedener Nutzer, die auf der elektronischen Karte angezeigt werden; und
2) Erstellen einer physischen Verbindung zwischen einer geographischen Position einer Vorrichtung und einer Leistungszufuhrvorrichtung auf höherer Ebene gemäß den unterschiedlichen Arten von Vorrichtungen und der eingerichteten Verbindungsregel; und
Schritt 6: Durchführen einer topologischen Vernetzung gemäß Zuständen der Schalter, wobei Schritt 6 Folgendes umfasst:
1) Bestimmen einer topologischen Beziehung zwischen benachbarten Vorrichtungen durch die regelgetriebene Vorrichtungsverwaltungsanwendung gemäß unterschiedlichen Betriebszuständen von Ein und Aus der Schalter; und
2) Prüfen einer Netzwerkverbindung mit einer Leistungszufuhrvorrichtung auf niedrigerer Ebene gemäß den Arten von unterschiedlichen Netzwerkknoten und einer Stromrichtung der entsprechenden Leistungszufuhrvorrichtung.

2. Verfahren nach Anspruch 1, wobei die Informationen über die geographische Position der Vorrichtungen über einen mobilen Client erfasst werden, der mobile Client GPS-Vorrichtungen, Mobiltelefone, Apple Touch, Straßenansichtsaufnahmefahrzeuge und mobile Vorrichtungen mit drahtloser Positionsbestimmungs- und Erfassungsfunktion beinhaltet, Positionsbestimmungsverfahren Folgendes beinhalten: Positionsbestimmung einer mobilen Basisstation, Wi-Fi-Positionsbestimmung und GPS-Positionsbestimmung.

3. Verfahren nach Anspruch 1, wobei die Informationen über die geographische Position der Vorrichtungen über einen mobilen Client mit einem Sofortnachrichtendienst erfasst werden.

4. Verfahren nach Anspruch 1, wobei die Informationen über die geographische Position der Vorrichtungen über einen mobilen Client mit einer Funktion wie etwa WeChat, Facebook und MSN erfasst werden.

## Revendications

1. Procédé de modélisation de réseau d'un système de gestion de réseau électrique, comprenant :
étape 1 : la réalisation d'une liste de dispositifs et l'établissement d'un modèle de réseau électrique, l'étape 1 comprenant :
1) la réalisation d'une liste des dispositifs intervenant dans le système de gestion de réseau électrique ; et
2) l'utilisation d'une carte électronique comme arrière-plan par une application de gestion de dispositif pilotée par des règles, dans lequel, dans l'application de gestion de dispositif pilotée par des règles, différents types de dispositifs et d'utilisateurs sont définis comme des nœuds de réseau, et les nœuds de réseau sont connectés par des lignes de façon à former un réseau de gestion pour un réseau électrique ; et différents types de nœuds de réseau comprennent une sous-station, une unité principale en anneau, un transformateur public, un commutateur, un grand utilisateur, un utilisateur moyen et un petit utilisateur, dans lequel l'application de gestion de dispositif pilotée par des règles est un logiciel d'application cloud ;
étape 2 : l'analyse des attributs des dispositifs et la définition d'une règle de connexion, l'étape 2 comprenant :
la définition à l'avance de la règle de connexion des différents types de nœuds de réseau en fonction des différents états des différents dispositifs lorsque le réseau électrique est en fonctionnement,
la règle de connexion comprend le fait que la sous-station en tant que point d'alimentation alimente le commutateur et le grand utilisateur, l'unité principale en anneau en tant que dispositif dans la ligne alimente l'utilisateur moyen et le transformateur public, et l'alimentation de l'unité principale en anneau est assurée par différents commutateurs ; le transformateur public en tant que dispositif à la borne de la ligne alimente le petit utilisateur, et l'alimentation du transformateur public est assurée par l'unité principale en anneau ;
étape 3 : l'utilisation d'une application client mobile pour acquérir des données, l'étape 3 comprenant :
1) l'acquisition de données par l'application cliente mobile ; et
2) à partir de la sous-station, l'acquisition des informations sur la position géographique de la sous-station, de l'unité principale en anneau, du transformateur public, du commutateur et de divers utilisateurs le long du trajet de la ligne, et l'envoi des informations par le biais de l'application client mobile ;
étape 4 : l'affichage des informations sur la position géographique des dispositifs à partir de la carte électronique, l'étape 4 comprenant :
l'affichage sur la carte électronique des informations sur la position géographique des différents dispositifs et des différents utilisateurs dans le modèle de réseau électrique, en fonction de la distribution du réseau électrique dans les rues, en considérant les utilisateurs comme des dispositifs dans le réseau électrique ;
étape 5 : la mise en œuvre de la mise en réseau physique selon la règle de connexion, l'étape 5 comprenant :
1) la recherche d'informations sur les dispositifs environnants par l'application de gestion de dispositifs pilotée par des règles, en fonction des informations sur la position géographique de différents dispositifs et de différents utilisateurs affichés sur la carte électronique ; et
2) l'établissement d'une connexion physique entre une position géographique d'un dispositif et un dispositif d'alimentation de niveau supérieur, en fonction des différents types de dispositifs et la règle de connexion établie ; et
étape 6 : la mise en œuvre de la mise en réseau topologique en fonction des états des commutateurs, l'étape 6 comprenant :
1) la détermination d'une relation topologique entre des dispositifs adjacents par l'application de gestion de dispositif pilotée par des règles, en fonction des différents états de fonctionnement de marche et d'arrêt des commutateurs ; et
2) la vérification d'une connexion réseau avec un dispositif d'alimentation de niveau inférieur, en fonction des types de nœuds de réseau différents et d'une direction de courant du dispositif d'alimentation correspondant.

2. Procédé selon la revendication 1, dans lequel les informations sur la position géographique des dispositifs sont acquises via un client mobile, le client mobile comporte des dispositifs GPS, des téléphones portables, Apple touch, des véhicules de prise de vue des rues et des dispositifs mobiles dotés d'une fonction de positionnement et d'acquisition sans fil, les procédés de positionnement comportant : le positionnement de la station de base mobile, le positionnement Wi-Fi et le positionnement GPS.

3. Procédé selon la revendication 1, dans lequel les informations sur la position géographique des dispositifs sont acquises via un client mobile avec un service de messagerie instantanée.

4. Procédé selon la revendication 1, dans lequel les informations sur la position géographique des dispositifs sont acquises via un client mobile avec une fonction telle que WeChat, Facebook et MSN.
